# EUROPEAN PATENT SPECIFICATION

(11) **EP 1 472 122 B1**
(45) Date of publication and mention of the grant of the patent: **01.06.2011**
(21) Application number: 02775645.1
(22) Date of filing: 04.10.2002
(51) Int. Cl.: B60T 7/20

(54) **AN ARRANGEMENT AND A METHOD FOR ACTIVATING AND DEACTIVATING THE BRAKING SYSTEM OF A TRAILER**
ANORDNUNG UND VERFAHREN ZUR AKTIVIERUNG UND DEAKTIVIERUNG DES BREMSSYSTEMS EINES ANHÄNGERS
DISPOSITIF ET PROCEDE D'ACTIVATION ET DE DESACTIVATION DU SYSTEME DE FREINAGE D'UNE REMORQUE

(30) Priority: 04.10.2001 SE 0103270
(43) Date of publication of application: 03.11.2004
(73) Proprietor: Liljeberg, Mattias, 127 41 Skärholmen (SE); Liljeberg, Michael, 127 41 Skärholmen (SE)
(72) Inventor: Liljeberg, Mattias, 127 41 Skärholmen (SE); Liljeberg, Michael, 127 41 Skärholmen (SE)
(74) Representative: Strandin, Heléne
(86) International application number: PCT/SE2002/001820
(87) International publication number: WO 2003/035442

(56) References cited:
- EP-A1- 0 587 217
- EP-A2- 0 319 970
- WO-A1-00/53479
- GB-A- 2 289 508
- US-A- 3 955 652

## Description

The present invention relates to an arrangement and a method for activating and deactivating the braking system of a trailer by utilization of power transmission to the trailer from a hauling vehicle. The brakes which today are used in trailers operate in the way that the brakes of the trailer are activated by a pushing force from the trailer which actuates upon the hauling vehicle. In the situation when such a pushing force is not exerted by the trailer its brakes are in a not activated state, permitting the trailer to roll freely. Consequently, when the motor vehicle is parked, the trailer must be kept in a braked condition by a separate hand brake. WO 0053479 discloses a trailer hitched to a tow vehicle having a slidably guided towing device which is spring-loaded in a first position. The towing device controls a brake force regulator which actuates the trailer brake. The brake force regulator is also controlled by an actuator which the tow vehicle brakes is actuated by an electrical transmission device between the tow vehicle and the trailer. To adjust the pull of the trailer acting on the tow vehicle the towing device can be displaced away from the first position to a second position.

The object of the present invention is to make it possible to activate the brakes of a trailer in absence of a pushing force from the trailer effecting the hauling vehicle. This results in a more efficient braking action and, in addition thereto, makes it possible for light vehicles to brake heavier trailers in a more efficient way. The features characterizing the invention are set out in the subsequent patent claims.

Thanks to the invention there has now been provided an arrangement and a method permitting a mode of functional operation for the brakes of a trailer, which in an excellent manner satisfy the intentions with the additional advantage that the device proper is structurally simple and cheap to manufacture. The technique of the arrangement according to the invention is very simple and it is possible to combine it or to use as a supplement to the state of the art of todays braking systems used in trailers. The basic idea of the invention is to make it possible to activate the braking system of a trailer as soon as that system does not detect any pulling force from the hauling vehicle. When the brakes of the trailer are combined with a traditional braking system they will upon a powerful braking get activated earlier than when the state of the art technique is used. Further advantage is that both slower brakings, for example with the aid of the motor, and weak brakings can be made without this causing the trailer to subject the hauling vehicle to a pushing force from the trailer. Additional advantages of a trailer according to the invention as compared with traditional trailers are as follows. The road safety will be higher thanks to the reduced risks of the trailer starting to "wobble". Another factor increasing the traffic safety is that safety line between the trailer and the hauling vehicle can be integrated in the system. This smother braking of the trailer results in softer jerks and jolt meaning increased comfort for the passengers and reduced wear of the clutch devices connecting the hauling vehicle with the trailer. There will also be less wear of the brakes of the hauling vehicle and more even power transmission during starting operation. This means that the hauling vehicle, instead of being subjected to a butt jerk when starting to roll the coupling will offer a more even power distribution when the spring means used according to the invention is actuated to release the brakes. Finally the invention offers a simple design, which can be used to supplement the traditional equipment when desired.

The invention will now be described more in detail, reference being made to the enclosed drawings, in which
Fig.1 is a lateral view showing a first embodiment of the invention,
Fig.2 is a top view of the embodiment shown in fig 1 and
Fig.3 does in a lateral view illustrate an alternative embodiment showing a braking device according to the invention.

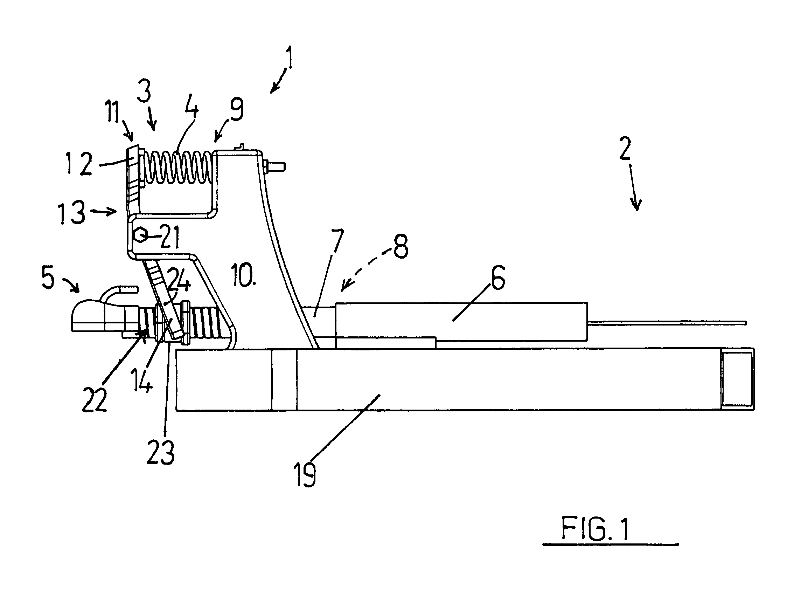

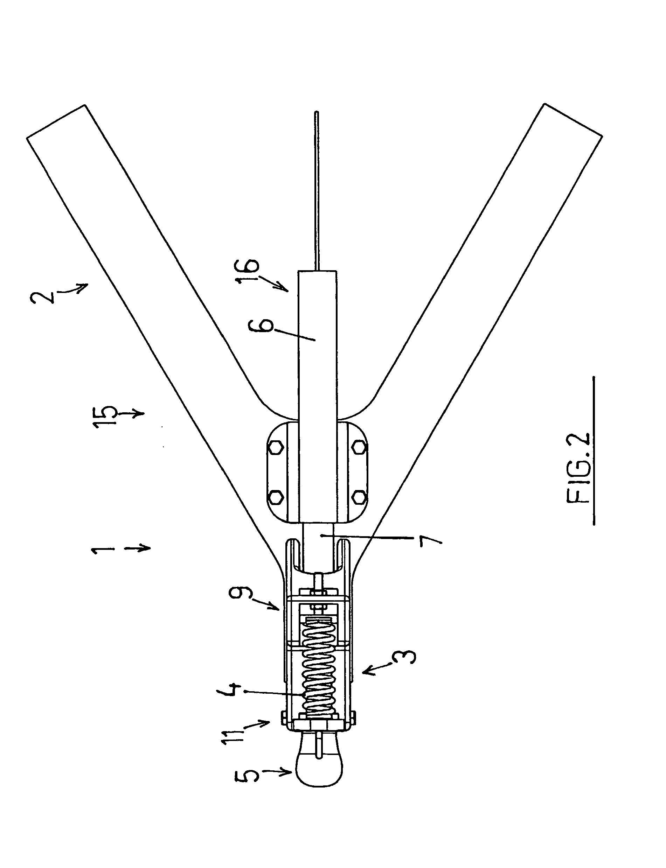

Figures 1 and 2 show an embodiment, which illustrates the function of a braking device 1 according to the invention when installed in a typical trailer 2. A spring member 3 in the shape of a helical spring 4 is used to activate the brakes in the braking system. When the clutch device 5, which is connected to the traction hook 17 is subjected to a traction force the brakes are deactivated due to reduction of the pressure in a master cylinder 6 to which the clutch device is displaceably connected via an extended portion or a traction rod 7. Alternatively a wire 8 can be connected to the brakes in order to release them. When the helical spring 4 is compressed the result thereof will be that the brakes are released as soon as the traction force of the hauling vehicle is conveyed to the trailer 2. The function involving compression of the helical spring 4 upon application of the pulling force results in a successive power transmission between the trailer and the pulling vehicle. In this way one avoids heavy jerks, such as sudden starts, and the brakes of the trailer are released successively. When the pulling force of the hauling vehicle is reduced, for example during motor braking, the helical spring 4 is extended towards its normal position, or rest position, and the brakes of the trailer 2 are activated. Stated in other words it could be said that the vehicle does always "pull" the trailer. According this embodiment the spring 4 is mounted with its one end 9 connected to the chassis 19 of the trailer via a support post 10. The other end 11 is attached to the free end of a lever 13, which via a pivot pin 21 is supported by the post 10. The other end 14 of the lever 13 is suitably and pivotably connected to the pulling rod 7 via an external thread 22, a nut 23 and a pivot pin 24. It is naturally possible to use as the spring member 3 any other equivalent means which can provide the same function as the helical spring 4, for example a leaf spring device, a pneumatically or hydraulically operating means etc.

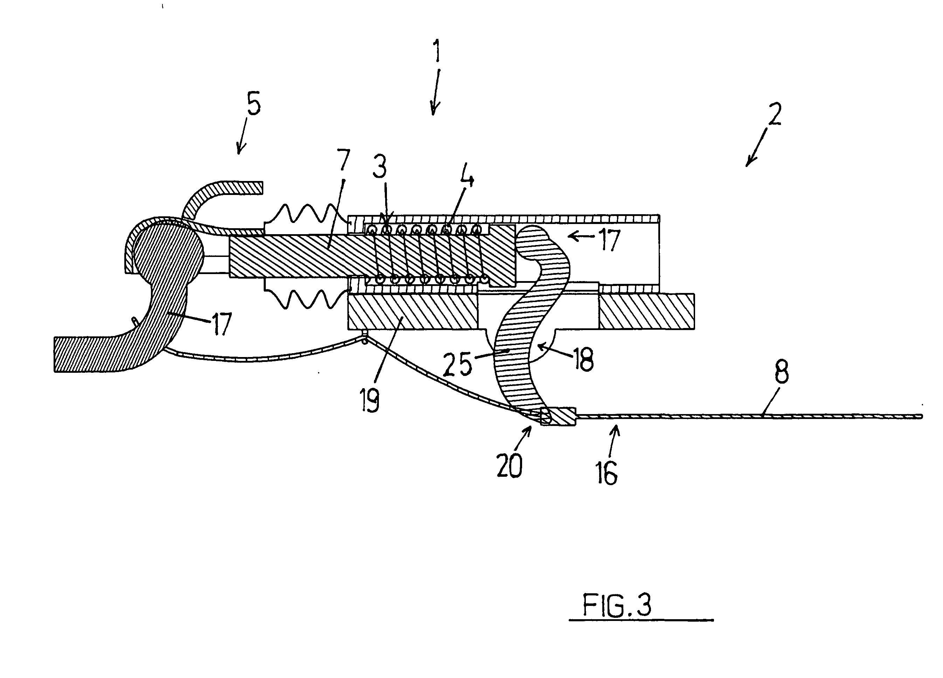

In the embodiment shown in fig. 3 the brake operates in the same way as according to the first embodiment but the spring member 3 is here in the shape of a helical spring 4 which surrounds the polling rod 7 and is mounted in such a way that, also in this case, the helical spring 4 will be compressed when a pulling force is applied causing simultaneous deactivation of the brakes of the trailer 2. According to both embodiments the pulling rod 7 is displaceably mounted in the front portion 15 of the trailer. The displacement movement of the rod takes place along a predetermined distance extending from a inserted rest position, in which the brakes are activated as caused by the spring member 3, and an extended active position in which the brakes are released, the spring action having been suspended by the pulling force from the vehicle. A governor 16 controlled by the pulling rod 7 does alternately activate and deactivate the braking system of the trailer 2.

In this second embodiment the one end 17 of a lever 18 is connected to the pulling rod 7 and the lever 18 is pivotally attached to the chassis 19 of the trailer 2 via a pivot axel 25. The opposite end 20 the lever 18 is pivotally connected to the governor 16 controlling the braking system. With the aid of the spring 4 the lever 18 acts to maintain the rod 7 in its rest position or inserted position, as long as the rod 7 and the related clutch device is not subjected to a pulling force upon deactivation of the brakes.

## Claims

1. A braking device for a trailer (2) designed, with the aid of the power transmission between a hauling vehicle and its trailer (2), to activate or release the brakes in the braking system of the trailer (2), **characterized in that** the brakes are adapted to be activated when the power transmission to the trailer (2) is reduced or absent due to the trailer (2) being stationary, and that the brakes are adapted to be deactivated when the clutch device (5) connected to the hauling vehicle is subjected to a pulling force, said clutch device (5) being, via an extension or a pulling rod (7), displaceably mounted in the front portion (15) of the trailer (2) a predetermined distance from an inserted idle position, in which the brakes are influenced by a spring member (3) to an extended active position, in which the brakes are released and the spring effect suspended, a governor (16) controlled by the pulling rod (7) being adapted alternatively to activate or deactivate the braking system of the trailer (2), activation of the braking system of the trailer (2) taking place immediately upon absence of a pulling force from the hauling vehicle.

2. A device according to claim 1, **characterized in that** said spring member (3) consists of a helical spring (4) the one free end (9) of which is resting against the chassis (19) of the trailer (2) and its other free end (11) against the one end (12) of a lever (13), which in its turn is pivotably attached to the chassis (19) of the trailer (2), the other end (14) of the lever being adjustably and pivotably connected to the pulling rod (7), said lever (13), assisted by the helical spring (4), acts to maintain the pulling rod (7) in its idle position or the inserted position as long as the clutch device (5) along with its related pulling rod (7) is not subjected to a pulling force upon deactivation of the brakes.

3. A device according to claim 2, **characterized in that** the brake system governor (16) comprises a master cylinder (6), in which the pulling rod (7) is mounted displaceably to generate a positive pressure, causing activation of the brakes or a negative pressure causing deactivation of the brakes, respectively.

4. A device according to claim 1 or 2, **characterized in that** the braking system governor is constituted by a mechanical arrangement in the shape of a wire (8) connected to the pulling rod (7) and the brake system to cause activation or release of the brakes, the spring force being reduced simultaneously with extension of the helical spring (4) and the spring force being increased simultaneously with interruption of the spring effect.

5. A method for activation and deactivation of the brakes of a trailer with utilization of the transmission of power from a hauling vehicle to the trailer (2), **characterized in that** the braking system of the trailer (2) is activated immediately upon interruption of a pulling force from the hauling vehicle and is deactivated as soon as the trailer (2) detects a pulling force from the hauling vehicle, an application of a pulling force from a hauling vehicle triggering displacement of a pulling rod (7) constituting an extension of the clutch device, which is connected to the hauling vehicle, forwards from a first, spring-biased idle position to a second spring-biased position, the spring action being discontinued with simultaneous deactivation of the braking system of the trailer (2), whereas, in absence of a pulling force from the hauling vehicle and when the latter is slowed down, the pulling rod (7) is displaced backward towards its first spring-biased idle position to cause activation of the braking system.

## Patentansprüche

1. Bremsvorrichtung für einen Anhänger (2), ausgestaltet, um mithilfe der Kraftübertragung zwischen einem Güterfahrzeug und seinem Anhänger (2) die Bremsen in dem Bremssystem des Anhängers (2) zu aktivieren oder zu lösen, **dadurch gekennzeichnet, dass** die Bremsen angepasst sind, aktiviert zu werden, wenn die Kraftübertragung zu dem Anhänger (2) aufgrund dessen vermindert oder nicht vorhanden ist, dass der Anhänger (2) feststehend ist, und dass die Bremsen angepasst sind, deaktiviert zu werden, wenn die Kupplungsvorrichtung (5), die an das Güterfahrzeug angeschlossen ist, einer Zugkraft unterliegt, wobei die Kupplungsvorrichtung (5) über einen Verlängerungsabschnitt oder eine Ziehstange (7), verschiebbar in dem vorderen Abschnitt (15) des Anhängers (2) in einem vorbestimmten Abstand von einer eingefügten Ruhestellung montiert ist, in der die Bremsen durch ein Federelement (3) in eine verlängerte aktive Position beeinflusst werden, in der die Bremsen gelöst und der Federeffekt ausgesetzt wird, wobei ein Regler (16) der von der Ziehstange (7) gesteuert wird, angepasst ist, das Bremssystem des Anhängers (2) alternativ zu aktivieren oder zu deaktivieren, wobei die Aktivierung des Bremssystems des Anhängers (2) unverzüglich bei Nichtvorhandensein einer Zugkraft von dem Güterfahrzeug stattfindet.

2. Vorrichtung nach Anspruch 1, **dadurch gekennzeichnet, dass** das Federelement (3) aus einer Schraubenfeder (4) besteht, deren eines freie Ende (9) an dem Chassis (19) des Anhängers (2) anliegt und deren anderes freies Ende (11) an dem einen Ende (12) eines Hebels (13), der wiederum schwenkbar an dem Chassis (19) des Anhängers (2) befestigt ist, wobei das andere Ende (14) des Hebels anpassbar und schwenkbar an der Ziehstange (7) angeschlossen ist, wobei der Hebel (13), unterstützt von der Schraubenfeder (4), wirkt, die Ziehstange (7) in ihrer Ruhestellung oder der eingefügten Position zu halten, solange die Kupplungsvorrichtung (5) zusammen mit ihrer zugehörigen Ziehstange (7) keiner Zugkraft bei Deaktivieren der Bremsen unterliegt.

3. Vorrichtung nach Anspruch 2, **dadurch gekennzeichnet, dass** der Bremssystemregler (16) einen Hauptzylinder (6) umfasst, in dem die Ziehstange (7) verschiebbar montiert ist, um einen positiven Druck zu erzeugen, der die Aktivierung der Bremsen verursacht, beziehungsweise einen negativen Druck, der die Deaktivierung der Bremsen verursacht.

4. Vorrichtung nach Anspruch 1 oder 2, **dadurch gekennzeichnet, dass** der Bremssystemregler aus einer mechanischen Anordnung in Form eines Drahts (8), der an die Ziehstange (7) und das Bremssystem angeschlossen ist, besteht, um das Aktivieren oder Lösen der Bremsen zu verursachen, wobei die Federkraft gleichzeitig mit der Verlängerung der Schraubenfeder (4) vermindert wird und die Federkraft gleichzeitig mit Unterbrechung des Federeffekts erhöht wird.

5. Verfahren zum Aktivieren und Deaktivieren der Bremsen eines Anhängers unter Verwendung der Kraftübertragung von einem Güterfahrzeug zu dem Anhänger (2), **dadurch gekennzeichnet, dass** das Bremssystem des Anhängers (2) unverzüglich bei Unterbrechung einer Zugkraft von dem Güterfahrzeug aktiviert wird und deaktiviert wird, sobald der Anhänger (2) eine Zugkraft von dem Güterfahrzeug erkennt, wobei das Aufbringen einer Zugkraft von einem Güterfahrzeug das Verschieben einer Ziehstange (7), die eine Verlängerung der Kupplungsvorrichtung darstellt, die an das Güterfahrzeug angeschlossen ist, nach vorn von einer ersten federvorgespannten Ruheposition in eine zweite federvorgespannte Position auslöst, wobei die Federwirkung bei gleichzeitiger Deaktivierung des Bremssystems des Anhängers (2) unterbrochen wird, wobei bei Nichtvorhandensein einer Zugkraft von dem Güterfahrzeug, und wenn das Letztere verlangsamt wird, die Ziehstange (7) nach hinten hin zu ihrer ersten federvorgespannten Ruheposition verschoben wird, um die Aktivierung des Bremssystems zu verursachen.

## Revendications

1. Dispositif de freinage pour une remorque (2), conçu pour, à l'aide de la transmission de force motrice entre un véhicule de remorquage et sa remorque (2), activer ou relâcher les freins dans le système de freinage de la remorque (2), **caractérisé en ce que** les freins sont adaptés pour être activés quand la transmission de force motrice vers la remorque (2) est réduite ou absente dû au fait que la remorque (2) est stationnaire, et **en ce que** les freins sont adaptés pour être désactivés quand le dispositif d'accouplement (5) connecté au véhicule de remorquage est soumis à une force de traction, ledit dispositif d'accouplement (5) étant, par le biais d'une extension ou d'une barre de traction (7), monté de manière mobile dans la portion avant (15) de la remorque (2) sur une distance prédéterminée d'une position de repos insérée, dans laquelle les freins sont influencés par un élément de ressort (3) à une position active étendue, dans laquelle les freins sont relâchés et l'effet de ressort suspendu, un governor (16) contrôlé par la barre de traction (7) étant adapté pour de manière alternative activer ou désactiver le système de freinage de la remorque (2), l'activation du système de freinage de la remorque (2) se faisant immédiatement lors de l'absence d'une force de traction provenant du véhicule de remorquage.

2. Dispositif selon la revendication 1, **caractérisé en ce que** ledit élément de ressort (3) consiste en un ressort hélicoïdal (4) dont l'une des extrémités libres (9) repose contre le châssis (19) de la remorque (2) et l'autre extrémité libre (11) contre l'une des extrémités (12) d'un levier (13), qui à son tour est attaché de manière pivotante au châssis (19) de la remorque (2), l'autre extrémité (14) du levier étant connectée de manière ajustable et pivotante à la barre de traction (7), ledit levier (13), avec l'assistance du ressort hélicoïdal (4), agit pour maintenir la barre de traction (7) dans sa position de repos ou la position insérée aussi longtemps que le dispositif d'accouplement (5) avec sa barre de traction (7) connexe n'est pas soumis à une force de traction lors de la désactivation des freins.

3. Dispositif selon la revendication 2, **caractérisé en ce que** le governor (16) du système de freinage comprend un maître-cylindre (6), dans lequel la barre de traction (7) est montée de manière mobile pour générer une pression positive, causant l'activation des freins ou respectivement une pression négative causant la désactivation des freins.

4. Dispositif selon la revendication 1 ou 2, **caractérisé en ce que** le governor du système de freinage est constitué par un agencement mécanique sous forme d'un fil (8) connecté à la barre de traction (7) et au système de freinage pour causer l'activation ou le relâchement des freins, la force de ressort étant réduite simultanément à l'extension du ressort hélicoïdal (4) et la force de ressort étant augmentée simultanément à l'interruption de l'effet de ressort.

5. Procédé d'activation et de désactivation des freins d'une remorque avec l'utilisation de la transmission de force motrice d'un véhicule de remorquage à la remorque (2), **caractérisé en ce que** le système de freinage de la remorque (2) est activé immédiatement lors de l'interruption d'une force de traction du véhicule de remorquage et est désactivé dès que la remorque (2) détecte une force de traction provenant du véhicule de remorquage, une application d'une force de traction provenant d'un véhicule de remorquage déclenchant le déplacement d'une barre de traction (7) constituant une extension du dispositif d'accouplement, qui est connecté au véhicule de remorquage, vers l'avant depuis une première position de repos sollicitée par ressort à une seconde position sollicitée par ressort, l'action du ressort étant interrompue avec la désactivation simultanée du système de freinage de la remorque (2), tandis que, en l'absence d'une force de traction provenant du véhicule de remorquage et quand ce dernier est ralenti, la barre de traction (7) est déplacée vers l'arrière vers sa première position de repos sollicitée par ressort pour causer l'activation du système de freinage.
